# EUROPÄISCHE PATENTSCHRIFT

(11) **EP 2 132 533 B1**
(45) Veröffentlichungstag und Bekanntmachung des Hinweises auf die Patenterteilung: **27.10.2010**
(21) Anmeldenummer: 08717347.2
(22) Anmeldetag: 04.03.2008
(51) Int. Cl.: G01F 1/684, G01F 15/18

(54) **THERMISCHES MASSEDURCHFLUSSGERÄT MIT PFEIFTON-ELIMINIERUNG**
THERMAL MASS FLOW RATE DEVICE WITH SOUND ELIMINATION
APPAREIL DE MESURE DU DÉBIT MASSIQUE THERMIQUE PRÉSENTANT DES MOYENS D'ÉLIMINATION DU SIFFLEMENT

(30) Priorität: 05.03.2007 DE 102007010912
(43) Veröffentlichungstag der Anmeldung: 16.12.2009
(73) Patentinhaber: Endress+Hauser Flowtec AG, 4153 Reinach (CH)
(72) Erfinder: NEUHAUS, Markus, CH-5028 Uecken (CH)
(74) Vertreter: Andres, Angelika Maria
(86) Internationale Anmeldenummer: PCT/EP2008/052584
(87) Internationale Veröffentlichungsnummer: WO 2008/107428

(56) Entgegenhaltungen:
- DE-A1-102004 058 553
- GB-A- 2 263 776
- US-A1- 2005 145 007

## Beschreibung

Die Erfindung betrifft eine Vorrichtung zur Bestimmung und/oder Überwachung des Massedurchflusses eines gasförmigen Mediums durch eine Rohrleitung bzw. durch ein Messrohr mit zwei in einem Sensorhalter befestigten Temperatursensoren, die im wesentlichen senkrecht zu der Strömungsrichtung des Mediums in das Messrohr bzw. in die Rohrleitung hineinragen, und mit einer Regel-/Auswerteeinheit, wobei der erste Temperatursensor beheizbar ausgestaltet ist, wobei der zweite Temperatursensor Information über die aktuelle Temperatur des Mediums bereitstellt, und wobei die Regel-/Auswerteeinheit anhand der Temperaturdifferenz zwischen den beiden Temperatursensoren und/oder anhand Heizleistung, die dem beheizbaren Temperatursensor zugeführt wird, den Massedurchfluss des Mediums durch die Rohrleitung bestimmt.

Herkömmliche thermische Durchflussmessgeräte wie z.B. veröffentlicht in DE 102004058553 oder US 2005145007 verwenden üblicherweise zwei möglichst gleichartig ausgestaltete Temperatursensoren, die in Metallhülsen, sog. Stingers, angeordnet sind und die in thermischem Kontakt mit dem durch ein Messrohr oder durch die Rohrleitung strömenden Medium sind. Für die industrielle Anwendung sind beide Temperatursensoren üblicherweise in ein Messrohr eingebaut; die Temperatursensoren können aber auch direkt in der Rohrleitung montiert sein. Einer der beiden Temperatursensoren ist ein sog. aktiver Temperatursensor, der mittels einer Heizeinheit beheizt wird. Als Heizeinheit ist entweder eine zusätzliche Widerstandsheizung vorgesehen, oder bei dem Temperatursensor selbst handelt es sich um ein Widerstandselement, z.B. um einen RTD-(Resistance Temperature Device) Sensor, der durch Umsetzung einer elektrischen Leistung, z.B. durch eine entsprechende Variation des Messstroms erwärmt wird. Bei dem zweiten Temperatursensor handelt es sich um einen sog. passiven Temperatursensor: Er misst die Temperatur des Mediums.

Üblicherweise wird in einem thermischen Durchflussmessgerät der beheizbare Temperatursensor so beheizt, dass sich eine feste Temperaturdifferenz zwischen den beiden Temperatursensoren einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Temperatursensors wesentlich von dem Massedurchfluss des vorbeiströmenden Mediums abhängig. Da das Medium kälter ist als der beheizte Temperatursensor, wird durch das vorbeiströmende Medium Wärme von dem beheizten Temperatursensor abtransportiert. Um also bei einem strömenden Medium die feste Temperaturdifferenz zwischen den beiden Temperatursensoren aufrecht zu erhalten, ist eine erhöhte Heizleistung für den beheizten Temperatursensor erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Temperatursensoren. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Temperatursensors notwendigen Heizenergie und dem Massedurchfluss durch eine Rohrleitung bzw. durch ein Messrohr. Die Abhängigkeit des sog. Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung 't-mass' angeboten und vertrieben.

Wird das Messrohr bzw. die Rohrleitung von einem gasförmigen Medium durchströmt, so tritt bei höheren Masseströmen eine starke Geräuschentwicklung in Form von Pfeiftönen auf, die durch die Wechselwirkung des strömenden Mediums mit den in die Strömung hineinragenden Temperatursensoren entstehen. Die Schallwellen, bei denen es sich um transversale Schallwellen handelt, erzeugen darüber hinaus im Bereich der Temperatursensoren Schwingungen, die die Messgenauigkeit des thermischen Durchflussmessgeräts erheblich reduzieren. Insbesondere ist die Kalibrierung des Meßgerätes nur noch unzureichend durchführbar, da der funktionale Zusammenhang zwischen Wärmeübertragungskoeffizient und Massedurchfluss nicht mehr eindeutig ist. Die Reproduzierbarkeit der Messergebnisse ist daher starken Schwankungen unterworfen.

Der Erfindung liegt die Aufgabe zugrunde, ein thermisches Durchflussmess-gerät vorzuschlagen, das über den gesamten Messbereich stabile Messwerte liefert.

Die Aufgabe wird dadurch gelöst, dass der Sensorhalter an der dem Medium zugewandten Stirnfläche eine Aussparung aufweist, dass jeweils ein Endbereich der Temperatursensoren durch die Aussparung an dem Sensorhalter fixiert ist, und dass die Aussparung so ausgestaltet ist, dass Schallwellen, die durch das an den Temperatursensoren vorbeiströmende Medium erzeugt werden, in der Aussparung stehende Schallwellen ausbilden bzw. absorbiert oder zumindest gedämpft werden.

Durch die Aussparung im Bereich der Befestigung der Temperatursensoren an dem Sensorhalter werden die Schallwellen absorbiert bzw. sehr stark gedämpft. Erklären lässt sich die Geräuschabsorption dadurch, dass die Schallwellen im Bereich der Aussparung stehende Wellen ausbilden, die sich durch Überlagerung gegenseitig vernichten. Durch die erfindungsgemäße Vorrichtung wird jedoch nicht nur der vom menschlichen Ohr als äußerst unangenehme Pfeifton eliminiert. Da die Schallwellen gedämpft bzw. absorbiert werden, sind sie nicht in der Lage, die Temperatursensoren zu mechanischen Schwingungen anzuregen. Hierdurch lässt sich die Messgenauigkeit des thermischen Messgeräts insbesondere im Bereich hoher Massenströme erheblich verbessern. Über den vom Hersteller ausgewiesenen Messbereich zeichnet sich das erfindungsgemäße Durchflussmessgerät durch sehr stabile und reproduzierbare Messwerte aus.

Gemäß einer vorteilhaften Ausgestaltung der erfindungsgemäßen Vorrichtung ist die Aussparung an dem Sensorhalter kegelförmig ausgestaltet. Insbesondere beträgt der Winkel an der Kegelspitze 90°. Der Sensorhalter ist bevorzugt einstückig ausgestaltet und besteht entweder aus Metall oder aus einem Kunststoff.

Die Erfindung wird anhand der nachfolgenden Figuren näher erläutert. Es zeigt:

Fig. 1: eine schematische Darstellung des erfindungsgemäßen thermischen Durchflussmessgeräts,

Fig. 2: einen Sensorhalter mit Temperatursensoren nach dem Stand der Technik,

Fig. 3: eine bevorzugte Ausgestaltung des erfindungsgemäßen Sensorhalters in Draufsicht,

Fig. 3a: ein Längsschnitt gemäß der Kennzeichnung A-A der in Fig. 3 gezeigten Ausgestaltung,

Fig. 3b: ein Längsschnitt gemäß der Kennzeichnung B-B der in Fig. 3 gezeigten Ausgestaltung und

Fig. 4: eine graphische Darstellung, in der die Wärmeübertragungskoeffizienten

a) bei einem Sensorhalter gemäß dem Stand der Technik und

b) bei dem erfindungsgemäßen Sensorhalter

in Abhängigkeit von dem Massedurchfluss des gasförmigen Mediums aufgetragen sind.

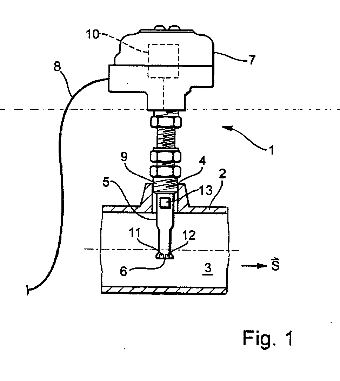

Fig. 1 zeigt eine schematische Darstellung des erfindungsgemäßen thermischen Durchflussmessgeräts 1 mit einem thermischen Durchfluss-sensor 6 und einem Messumformer 7. Das Durchflussmessgerät 1 ist über ein Schraubgewinde 9 in einem Stutzen 4, der sich an der Rohrleitung 2 befindet, befestigt. In der Rohrleitung 2 befindet sich das strömende Medium 3. Alternativ ist es möglich, das Durchflussmessgerät 1 mit integriertem Messrohr als Inline-Messgerät auszubilden.

Die Temperaturmesseinrichtung, die wesentlicher Teil des Durchflusssensors 6 ist, befindet sich in dem Bereich des Gehäuses 5, der dem Medium 3 zugewandt ist. Die Ansteuerung der Temperatursensoren 11,12 und/oder die Auswertung der von den Temperatursensoren 11,12 gelieferten Messsignale erfolgt über die Regel-/Auswerteeinheit 10, die im gezeigten Fall im Mess-umformer 7 angeordnet ist. Über die Verbindung 8 erfolgt die Kommunikation mit einer entfernten, in der Fig. 1 nicht gesondert dargestellten Kontrollstelle.

Wie bereits zuvor erwähnt, kann es sich bei zumindest einem der beiden Temperatursensoren 11, 12 um ein elektrisch beheizbares Widerstandselement, um einen sog. RTD-Sensoren, handeln. Selbstverständlich kann in Verbindung mit der erfindungsgemäßen Lösung auch ein üblicher Temperatursensor, z.B. ein Pt100 oder Pt1000 oder ein Thermoelement eingesetzt werden, dem eine thermisch angekoppelte Heizeinheit 13 zugeordnet ist. Die Heizeinheit 13 ist in der Fig. 1 im Gehäuse 5 angeordnet und thermisch an den beheizbaren Temperatursensor 11, 12 gekoppelt, aber von dem Medium weitgehend entkoppelt. Die Ankopplung bzw. die Entkopplung erfolgt bevorzugt über die Auffüllung der entsprechenden Zwischenräume mit einem thermisch gut leitenden bzw. einem thermisch schlecht leitenden Material. Bevorzugt kommt hierzu ein Vergussmaterial zum Einsatz.

Mit dem Durchflussmessgerät 1 ist es möglich, den Massedurchfluss kontinuierlich zu messen; alternativ ist es möglich, das Durchflussmessgerät 1 als Schalter zu verwenden, der immer dann die Änderung eines Schaltzu-standes anzeigt, wenn zumindest ein vorgegebener Grenzwert unter- oder überschritten wird.

Vorteilhafter Weise ist darüber hinaus vorgesehen, dass beide Temperatursensoren 11, 12 beheizbar ausgestaltet sind, wobei die jeweilige Funktion des ersten Temperatursensors 11 oder des zweiten Temperatursensors 12 von der Regel/Auswerteeinheit 10 bestimmt ist. Beispielsweise ist es möglich, dass die Regel-/Auswerteeinheit 10 die beiden Temperatursensoren 11,12 alternierend als aktiven oder passiven Temperatursensor 11,12 ansteuert und den Durchflussmesswert über eine Mittelung der von beiden Temperaturensoren 11,12 gelieferten Messwerte bestimmt.

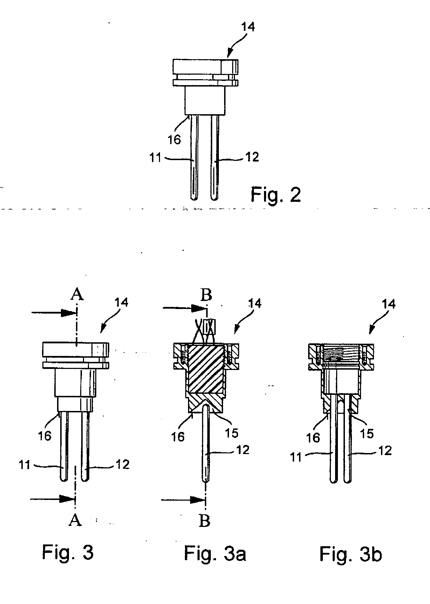

Fig. 2 zeigt in Draufsicht einen Sensorhalter 14 mit den beiden Temperatursensoren 11, 12, wie er aus dem Stand der Technik bekannt ist. Der Sensorhalter 14 hat ein topfförmiges Gehäuse. An der dem Medium 3 zugewandten Stirnfläche 16 sind die beiden Temperatursensoren 11, 12 in zwei parallel zueinander angeordneten dornförmigen Hülsen - sog. Stingers - positioniert. Die Hülsen sind thermisch an die Temperatursensoren 11,12 gekoppelt und schützen diese vor direktem Kontakt mit dem Medium 3.

Fig. 3 zeigt eine bevorzugte Ausgestaltung des erfindungsgemäßen Sensor-halters 14 in Draufsicht. Der Sensorhalter 14 unterscheidet sich von dem aus dem Stand der Technik bekannten Sensorhalter 14 dadurch, dass die Stirnfläche 16 nicht planar ist, sondern eine Aussparung 15 aufweist. Bevorzugt ist die Aussparung 15 kegelförmig, wobei der Winkel an der Kegelspitze vorteilhafter Weise 90° beträgt. Der Sensorhalter 14 ist einstückig, z.B. als metallisches Drehstück, ausgestaltet. Eine kegelförmige Aussparung 15 mit einem Winkel an der Kegelspitze von 90° kann mit einem Standardwerkzeug gefertigt werden. Die beiden Temperatursensoren 11, 12 sind im Bereich der Aussparung 15 mit dem Sensorhalter 14 verbunden. Gut ersichtlich ist dies aus Fig. 3b.

Es versteht sich von selbst, dass die Aussparung 15 auch ein anderes Design ausweisen kann. Wichtig ist, dass die Aussparung 15 so ausgestaltet ist, dass auftretende Schallwellen hier möglichst vollständig absorbiert werden.

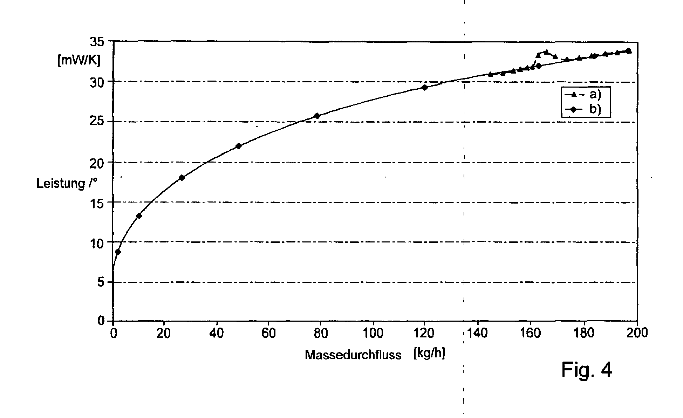

Der Effekt des erfindungsgemäßen Sensorhalters 14 ist anhand der Fig. 4 gut zu sehen. Hier sind schematisch zwei sog. Kalibrierkurven dargestellt. Jede der Kalibrierkurven skizziert hier den Wärmeübertragungskoeffizienten, d.h. die Leistung, die pro Grad Temperaturänderung dem beheizbaren Temperatursensor 11 zugeführt werden muss, in Abhängigkeit von dem Massedurchfluss des Mediums 3.

Die mit a) gekennzeichnete Kurve zeigt die funktionale Abhängigkeit für einen aus dem Stand der Technik bekannt gewordenen Sensorhalter 14 mit planarer Stirnseite 16. Im Bereich des höheren Massedurchflusses zeigt die Kurve eine Anomalie: Die Heizleistung / ° folgt hier nicht mehr einer stetig steigenden Kurve, sondern dem Temperatursensor 11 muss in einem gewissen Bereich eine überhöhte Heizleistung zugeführt werden, die erst wieder bei einem weiter steigenden Massedurchfluss abnimmt. Dies ist der Bereich, in dem auch die starke Geräuschentwicklung stattfindet. Da die Abhängigkeit zwischen Wärmeübertragungskoeffizienten und Massedurchfluss nicht mehr eindeutig definiert ist, sind die Messwerte nicht reproduzierbarentsprechend hoch ist hier die Messungenauigkeit.

Die mit b) gekennzeichnete Kalibrierkurve zeigt den Wärmeübertragungskoeffizienten in Abhängigkeit von dem Massedurchfluss für ein thermisches Durchflussmessgerät 1, das erfindungsgemäß eine Aussparung 15 im Bereich der Stirnfläche 16 des Sensorhalters 14 aufweist. Die Kurve ist monoton steigend. Zwecks Kalibrierung des thermischen Durchflussmessgeräts 1 bedeutet dies, dass Vergleichsmessungen nur noch an wenigen Stellen ausgeführt werden müssen, um die spezifische Kalibrierkurve des Messgeräts 1 zu erstellen. Aufgrund des stetigen Verhaltens der Kurve ist die Messgenauigkeit bei dem erfindungsgemäßen thermischen Durchflussmessgerät 1 wesentlich besser als bei der bekannten Lösung.

### [0035] Bezugszeichenliste

- 1.: Thermisches Durchflussmessgerät
- 2.: Rohrleitung / Messrohr
- 3.: Medium
- 4.: Stutzen
- 5.: Gehäuse
- 6.: Sensor
- 7.: Messumformer
- 8.: Verbindungsleitung
- 9.: Gewinde
- 10.: Regel-/Auswerteeinheit
- 11.: Erster Temperatursensor
- 12.: Zweiter Temperatursensor
- 13.: Heizeinheit
- 14.: Sensorhalter
- 15.: Aussparung
- 16.: Stirnfläche

## Patentansprüche

1. Vorrichtung zur Bestimmung und/oder Überwachung des Massedurchflusses eines gasförmigen Mediums (3) durch eine Rohrleitung (2) bzw. durch ein Messrohr mit zwei in einem Sensorhalter befestigten stiftförmigen Temperatursensoren (11, 12), die im wesentlichen senkrecht zu der Strömungsrichtung des Mediums in das Messrohr bzw. in die Rohrleitung hineinragen, und mit einer Regel-/Auswerteeinheit (10), wobei der erste Temperatursensor (11) beheizbar ausgestaltet ist, wobei der zweite Temperatursensor (12) Information über die aktuelle Temperatur des Mediums (3) bereitstellt, und wobei die Regel-/Auswerteeinheit (10) anhand der Temperaturdifferenz (ΔT = *T*₂*- T*₁) zwischen den beiden Temperatursensoren (11, 12) und/oder anhand Heizleistung (P), die dem beheizbaren Temperatursensor (11) zugeführt wird, den Massedurchfluss des Mediums (3) durch die Rohrleitung (2) bestimmt,
**dadurch gekennzeichnet,**
**dass** der Sensorhalter (14) an der dem Medium (3) zugewandten Stirnfläche (16) eine Aussparung (15) aufweist,
**dass** jeweils ein Endbereich der Temperatursensoren (11, 12) durch die Aussparung (15) an dem Sensorhalter (14) fixiert ist, und
**dass** die Aussparung (15) so ausgestaltet ist, dass Schallwellen, die durch das an den Temperatursensoren (11, 12) vorbeiströmende Medium (3) erzeugt werden, in der Aussparung (15) stehende Schallwellen ausbilden bzw. absorbiert oder zumindest gedämpft werden.

2. Vorrichtung nach Anspruch 1,
**dadurch gekennzeichnet,**
**dass** die Aussparung (15) kegelförmig ausgestaltet ist.

3. Vorrichtung nach Anspruch 2,
**dadurch gekennzeichnet,**
**dass** der Winkel an der Kegelspitze 90° der Aussparung (15) beträgt.

4. Vorrichtung nach Anspruch 1, 2 oder 3,
**dadurch gekennzeichnet,**
**dass** der Sensorhalter (14) aus Metall oder aus einem Kunststoff gefertigt ist.

## Claims

1. Unit for determining and/or monitoring the mass flow of a gaseous medium (3) through a pipe (2) or a measuring tube with two pin-like temperature sensors (11, 12) secured in a sensor holder, said sensors projecting into the measuring tube or pipe primarily perpendicular to the flow direction of the medium, and with a control/evaluation unit (10), where the first temperature sensor (11) is designed as heatable, and where the second temperature sensor (12) provides information on the current temperature of the medium (3) and where the control/evaluation unit (10) determines the mass flow of the medium (3) through the pipe (2) on the basis of the difference in temperature (ΔT = *T₂ - T₁*) between the two temperature sensors (11, 12) and/or using the heating power (P) that is fed to the heatable temperature sensor (11),
**characterized in that**
- the sensor holder (14) has a recess (15) on the front surface (16) facing the medium (3),
- an end section of the temperature sensors (11, 12) is fixed on the sensor holder (14) via the recess (15)
- the recess (15) is designed in such a way that sound waves, which are generated by the medium (3) flowing past the temperature sensors (11, 12), form standing sound waves in the recess (15) or are absorbed or at least attenuated.

2. Unit as per Claim 1
**characterized in that** the recess (15) has a conical shape.

3. Unit as per Claim 2
**characterized in that** the angle at the cone tip is 90° of the recess (15).

4. Unit as per Claim 1, 2 or 3
**characterized in that** the sensor holder (14) is made of metal or a synthetic material.

## Revendications

1. Dispositif destiné à la détermination et/ou la surveillance du débit massique d'un produit gazeux (3) à travers une conduite (2) ou à travers un tube de mesure à l'aide de deux capteurs de température (11, 12) en forme de pointe, fixés dans un support de capteurs, qui s'étendent pour l'essentiel perpendiculairement au sens d'écoulement du produit à l'intérieur du tube de mesure ou de la conduite, et avec une unité de régulation / d'exploitation (10), le premier capteur de température (11) étant conçu en tant que capteur chauffé, le deuxième capteur de température (12) mettant à disposition des informations sur la température actuelle du produit (3) et l'unité de régulation / d'exploitation (10) déterminant le débit massique du produit (3) à travers la conduite (2) au moyen de la différence de température (ΔT = T₂ - T₁) entre les deux capteurs de température (11, 12) et/ou au moyen de la puissance de chauffage (P), qui est acheminée au capteur de température (11) chauffé,
**caractérisé en ce**
**que** le support de capteurs (14) présente sur la surface frontale (16) un évidement (15) faisant face au produit (3),
**qu'**une zone d'extrémité des capteurs de température (11, 12) est fixée respectivement à travers l'évidement (15) sur le support de capteurs (14), et
**que** l'évidement (15) est conçu de telle manière que les ondes sonores, qui sont générées par le passage du produit (3) devant les capteurs de température (11, 12), forment dans l'évidement (15) des ondes sonores fixes ou sont absorbées ou au moins atténuées.

2. Dispositif selon la revendication 1,
**caractérisé en ce**
**que** l'évidement (15) est conçu en forme de cône.

3. Dispositif selon la revendication 2,
**caractérisé en ce**
**que** l'angle au niveau de la pointe du cône de l'évidement (15) est de 90°.

4. Dispositif selon la revendication 1, 2 ou 3,
**caractérisé en ce**
**que** le support de capteurs (14) est fabriqué en métal ou en une matière plastique.
